# EUROPEAN PATENT APPLICATION

(11) **EP 4 276 127 A1**
(43) Date of publication of application: **15.11.2023**
(21) Application number: 22173053.4
(22) Date of filing: 12.05.2022
(51) Int. Cl.: C08G 18/24, C08G 18/66, C08G 18/76, C09D 175/04, C09D 175/08

(54) **ISOCYANATE REACTIVE COMPOSITION FOR PREPARATION OF A POLYURETHANE COMPOSITE**

(71) Applicant: Covestro Deutschland AG, 51373 Leverkusen (DE)
(72) Inventor: Li, Zhijiang, Pudong District, Shanghai, 201318 (CN); Gu, Yongming, Pudong New District, Shanghai, 201208 (CN); Zhang, Hui, Zhujing Town, Jinshan District, Shanghai, 201502 (CN)
(74) Representative: Levpat

(57) **Abstract**

The present invention is directed to an isocyanate reactive composition for preparation of polyurethane composites, a method for preparation of a polyurethane composite comprising using the isocyanate reactive composition, use of the isocyanate reactive composition in a method for preparation of a polyurethane composite and resulting polyurethane composites.

## Description

The present invention is directed to an isocyanate reactive composition for preparation of polyurethane composites, a method for preparation of a polyurethane composite comprising using the isocyanate reactive composition, use of the isocyanate reactive composition in a method for preparation of a polyurethane composite and resulting polyurethane composites. Specifically, the present invention relates to an isocyanate reactive composition for preparation of a polyurethane pultrudate, a pultrusion process comprising using the isocyanate reactive composition, use of said composition in a pultrusion process and a polyurethane pultrudate prepared from said composition.

Pultrusion processes for the production of fiber-reinforced plastics profiles are known per se, and are used for the production of numerous different profiles in various application sectors, for example in the construction industry (for example for window frames and door frames), in electrical equipment (for example cable ducts), and also in consumer products (for example sports equipment). Pultrusion processes usually use a plastic (for example a molten thermoplastic such as polypropylene, or a liquid reactive resin such as a polyurethane reaction system) for continuous impregnation of reinforcing fibers (for example glass fibers or carbon fibers) which take the form of continuous-filament fibers, of continuous-filament-fiber bundles (rovings), or of semifinished textile products, and then draw said reinforcing fibers through a temperature-controllable die in which the final profiling takes place and the plastic is solidified.

Fiber reinforced polyurethane composites comprise at least two components, namely reinforcing fibers and a resin matrix in which reinforcing fibers are distributed. Fiber reinforced polyurethane composites have many advantages compared to traditional materials: they are lighter than steel, exhibit improved impact resistance compared to aluminum alloys and excellent chemical resistance property.

However, one of the greatest challenges for polyurethane pultrusion is an increase in the velocity at which reinforcing fibers can be drawn through the pultrusion device (also referred to as "line speed") without adversely affecting pultrudate quality. In order to balance line speed and mechanical properties of the pultrudate it is general practice in the industry to increase the amounts of catalyst and/or higher-functional polyols. An increase in catalyst amounts can increase reactivity but it decreases pot-life at room temperature which can result in undesired early solidification (also referred to as "gelling") at the injection box in contrast to gelling in the die according to the design of the pultrusion process. High-functional polyols usually have the drawback that their viscosity is very high which results in worse fiber impregnation with the polyurethane reaction system compared to a polyurethane reaction system of lower viscosity.

Several prior art documents are related to the objective to provide polyurethane reaction systems which allow for faster line speeds without decreasing mechanical properties of the resulting pultrudate and/or disclose that diethylene glycol and glycerol can - separately - be used in isocyanate reactive compositions suitable for preparation of polyurethane composites, for example CN103833955 A, US 2004/0106726 A1, WO2018192927 A1, WO2019121349 A1, WO2018162519 A1, WO2017182323 A1 and WO0029459. None of these documents, however, discloses an isocyanate reactive composition which comprises both glycerol and diethylene glycol.

To date, an urgent need for a suitable isocyanate reactive composition allowing for preparation of polyurethane composite exhibiting good mechanical properties at faster line speed remains.

Surprisingly, this task has been solved by an isocyanate reactive composition for preparation of a polyurethane composite, comprising
a. a polyol blend comprising
   a1. glycerol, and
   a2. diethylene glycol
   wherein a ratio of an amount of glycerin to an amount of diethylene glycol is > 1:1, preferably ≥ 1.5:1.

The isocyanate reactive composition according to the invention thus comprises a polyol blend which comprises at least glycerol and diethylene glycol, and the amount of glycerol is higher than the amount of diethylene glycol.

Preferably, the ratio of the amounts of glycerol and diethylene glycol is at least 1.2:1, 1.3:1, 1.4:1, or most preferred at least 1.5:1. It is further preferred that the amounts of glycerol and diethylene glycol is less than 20:1, preferably less than 10:1, more preferably less than 5:1, most preferably less than 3:1.

In one embodiment of the invention, the sum of the amounts of glycerol and diethylene glycol is 20 - 50 wt%, preferably 31 - 50 wt%, based on the total amount of the isocyanate reactive composition. Preferably, the amount of glycerol is 15 - 45 wt%, more preferably 18 - 40 wt%, even more preferably 19 - 30 wt%, and/or the amount of diethylene glycol is preferably 5 - 29 wt%, more preferably 8 - 20 wt%, most preferably 9 - 15 wt%.

The isocyanate reactive composition of the present invention may comprise further isocyanate reactive components. In principle, any isocyanate-reactive component suitable for use in the production of polyurethane composites is acceptable, such as polyols or amines, specifically polyether polyols, polyester polyols, polycarbonate polyols, polyether ester polyols or polyether carbonate polyols. Especially preferred are polyether polyols. These suitable polyols are known to the skilled person.

Suitable polyether polyols include addition products of the reaction of styrene oxide, ethylene oxide, propylene oxide, butylene oxide and/or epichlorohydrin with di- or polyfunctional starter compounds, such as alcohols, amines, thiols, or mixtures of the foregoing. Preferred starter compounds include carbohydrates such as sorbitol or sucrose, mixtures thereof or mixtures of carbohydrates, especially sorbitol or sucrose, and low molecular weight alcohols such as ethylene glycol, diethylene glycol, propylene glycol, or glycerol.

Suitable polyester polyols include polycondensates of di-, tri- or tetrafunctional alcohols with di-, tri- or tetrabasic carboxylic acids or hydroxycarboxylic acids. In lieu of free polycarboxylic acids, the respective polycarboxylic acid anhydrides or polycarboxylic acid esters of lower alcohols may be employed in the production of polyester polyols.

Suitable polyether ester polyols are those compounds which contain ether groups, ester groups and OH groups. Organic dicarboxylic acids having up to 12 carbon atoms or derivatives thereof are suitable for the preparation of these polyether ester polyols. Polyether polyols which are obtained by alkoxylating starter molecules, such as polyhydric alcohols, are used as a further component for the preparation of the polyether ester polyols. The starter molecules are at least difunctional, but may optionally also contain proportions of higher-functional, in particular trifunctional, starter molecules. Polyether ester polyols can also be prepared by the alkoxylation of reaction products obtained by the reaction of organic dicarboxylic acids and their derivatives and components with reactive hydrogens.

Polycarbonate polyols which can be used are polycarbonates containing hydroxyl groups, for example polycarbonate diols. These are obtainable by reacting carbonic acid derivatives, such as diphenyl carbonate, dimethyl carbonate or phosgene, with polyols, preferably diols, or by copolymerizing alkylene oxides, such as propylene oxide, with CO₂.

Instead of or in addition to pure polycarbonate diols, polyether carbonate polyols can also be used which are obtainable, for example, by copolymerization of a starter compound with alkylene oxides and CO₂.

In one embodiment, the polyol blend of the isocyanate reactive composition of the invention further comprises a3. a polyol, preferably a polyether polyol, having a functionality of 2 - 5, preferably 2 - 4, and a weight-average molecular weight of ≤1100 g/mol, preferably ≤800 g/mol, more preferably ≤750 g/mol; and a4. a polyol, preferably a polyether polyol, having a functionality of 2 - 3 and a weight-average molecular weight of ≥1200 g/mol, preferably ≥1500 g/mol, more preferably ≥2000 g/mol.

In the context of this application, functionality refers to the theoretical average functionality of an isocyanate reactive component or mixture of isocyanate reactive components.

In the context of this application, weight-average molecular weight is measured according to DIN55672-1:2007.

It is most preferred that polyol a3. is a glycerol-initiated polyether polyol with a weight-average molecular weight of 300 - 400 g/mol, even more preferred 330 - 370 g/mol. It is further most preferred that polyol a4. is a propylene glycol-initiated polyether polyol a weight-average molecular weight of 3200 - 4800 g/mol, even more preferred 3800 - 4200 g/mol.

In one embodiment, the isocyanate reactive composition comprises polyol a3. in an amount of 35 - 65 wt%, or it comprises polyol a4. in an amount of 5 - 15 wt%, or it comprises polyol a3. in an amount of 35 - 65 wt% and polyol a4. in an amount of 5 - 15 wt%, each based on the total amount of the isocyanate reactive composition.

In one embodiment, the isocyanate reactive composition of the invention further comprises b. at least one metal catalyst, and optionally c. an auxiliary agent and/or an additive, such as at least one of a filler, an internal release agent, a flame retardant, a smoke suppressant, a dye, a pigment, an antistatic agent, an antioxidant, a UV stabilizer, a diluent, an organic acid, an inorganic acid, a masking agent, an organic ligand, a defoamer, a coupling agent, a surface wetting agent, a leveling agent, a water-removing agent, a catalyst, a molecular sieve, a thixotropic agent, a plasticizer, a foaming agent, a foam stabilizing agent, a free radical reaction suppressant or any combination of the foregoing.

Optionally, the isocyanate reactive composition of the present invention comprises at least one catalyst. The catalyst is preferably selected from, but not limited to, tertiary amine catalysts, alkali metal catalysts, and organotin compounds, such as N,N-dimethylcyclohexylamine, triethylenediamine, triethylamine, pentamethyldiethylenetriamine, tris(dimethylaminopropyl)hexahydrotriazine, bis(dimethylaminoethyl)ether, potassium acetate, potassium isooctanoate, potassium oleate, tin(II) acetate, tin(II) octoate, tin ethylhexanoate, tin laurate, dibutyl tin oxide, dibutyl tin dichloride, dibutyl tin diacetate, dibutyl tin maleate, dioctyl tin diacetate, or a mixture of any of the foregoing, most preferably a catalyst selected from the metal catalysts specified above or a mixture of catalysts including a metal catalyst specified above. Particularly preferably, the isocyanate reactive composition of the present invention does not comprise a tin catalyst disclosed in WO 2019/121349 as according to the invention of WO 2019/121349. Preferably, the amount of catalyst is 0.001 - 3.0 wt%, even more preferred 0.01~2%, based on the total amount of the isocyanate reactive composition.

The blowing agent that may be used in the present invention includes physical blowing agents and chemical blowing agents. Those commonly used are low-boiling alkanes and fluorocarbons, such as pentane, cyclopentane, n-pentane, n-hexane, petroleum ether, hydrofluorocarbons, vinyl hydrochlorofluorocarbons, etc. The chemical blowing agents may be preferably water.

In one aspect, the present invention relates to a polyurethane reaction system for preparation of a polyurethane composite comprising the isocyanate reactive composition according to the invention and an isocyanate composition comprising a polyisocyanate.

The average functionality of the isocyanate usable in the present invention is preferably 2.0 - 3.5, particularly preferably 2.1 - 2.9. The viscosity of the isocyanate is preferably 5 - 700 mPa·s, particularly preferably 10 - 300 mPa·s, measured at 25°C according to DIN 53019-1-3.

Preferably, the polyisocyanate of the present invention includes dimers, trimers, tetramers, pentamers of the isocyanates, or a combination thereof.

Preferably, the polyisocanate is selected from the group consisting of toluene diisocyanate, diphenylmethane diisocyanate, polyphenylmethane polyisocyanate, 1,5-naphthalene diisocyanate, hexamethylene diisocyanate, methylcyclohexyl diisocyanate, 4,4'-dicyclohexylmethane diisocyanate, isophorone diisocyanate, p-phenylene diisocyanate, p-xylylene diisocyanate, tetramethyldimethylene diisocyanate, a polymer of any of the foregoing, a prepolymer of any of the foregoing, or a combination of any of the foregoing.

In a preferred embodiment of the present invention, the isocyanate component A is selected from diphenylmethane diisocyanate (MDI), polyphenylene polymethylene polyisocyanate (pMDI), and their polymers, prepolymers or a combination thereof. A blocked isocyanate may also be used as the isocyanate of component A, which may be prepared by reacting an excess of organic polyisocyanates or a mixture thereof with a polyol compound. These compounds and their preparation methods are well known to those skilled in the art.

In one embodiment, an isocyanate index of the polyurethane reaction system is 0.9 - 1.4, preferably 0.95 - 1.3, more preferably 1.0 - 1.2.

In the context of the present application, isocyanate index (or index) is a ratio of equivalents of NCO groups of the polyisocyanate to the total equivalents of the reactive hydrogen atoms of the remaining components reactive to isocyanate groups.

In one embodiment, the polyurethane reaction system has a gel time at 25 °C of 10 - 50 minutes, preferably 12 - 40 minutes, more preferably 15 - 30 minutes, determined according to the method specified in the description.

In the context of the present application, gel time refers to a period of time that begins when an isocyanate reactive composition and an isocyanate composition of a polyurethane reaction system are mixed and ends when the viscosity reaches a certain value (for example, about 10,000 mPa·s). The gel time mentioned in the embodiments of the present invention is measured using a gel time tester (GT-STHP-220 of Shanghai Senlan Scientific Instrument Co., Ltd.).

In one aspect, the present invention relates to a method for preparation of a polyurethane composite comprising the steps of
i. providing the polyurethane reaction system according to the present invention and a reinforcing fiber material,
ii. impregnating the reinforcing fiber material with the polyurethane reaction system to obtain an impregnated reinforcing fiber material, and
iii. curing the polyurethane reaction system of the impregnated reinforcing fiber material of step
   ii. to obtain the polyurethane composite.

In one embodiment, the method is selected from a pultrusion process, a winding molding process, a hand lay-up molding process, a spray molding process, or a heating dual-track continuous molding process, preferably wherein the method is a pultrusion process.

In one embodiment, the polyurethane reaction system and the reinforcing fiber material are provided in amounts such that a content of the reinforcing fiber material 70 - 88 wt%, preferably 72 - 85 wt%, more preferably 75 - 82 wt%, based on the total weight of the polyurethane composite.

In one embodiment, the reinforcing fiber material is at least one of glass fibers, aramid fibers, carbon fibers, natural fibers, metal fibers or any combination of the foregoing. Where used in the present invention, there is no requirement on the shape and size of the reinforcing fiber material. For example, it may be a continuous fiber, a fiber web formed by bonding, or a fiber fabric.

In one aspect, the present invention relates to a polyurethane composite obtained or obtainable by the method according to the invention.

In one aspect, the present invention relates to a polyurethane product comprising the polyurethane composite according to the invention, wherein the polyurethane product is selected from cable trays, frames of doors, windows or curtain walls, frames of ladders, solar frame, tent poles or pipes, anti-glare shields, floors, sucker rods, telegraph poles and cross arms, guardrails, gratings, architectural sectional materials, container sectional materials or plates, bike racks, fishing rods, cable cores, insulator core rods, antenna housings, single-layer or sandwiched continuous plates, sleepers, main spars or auxiliary spars of a turbine fan blade, preferably wherein the polyurethane product is selected from sleepers or sheets for producing main spars and/or auxiliary spars of a turbine fan blade. Unless defined otherwise, all technical and scientific terms used herein have the same meaning as commonly understood by those skilled in the art. When the definition of a term in this specification conflicts with the meanings commonly understood by those skilled in the art, the definition described herein shall apply.

The present invention is illustrated by the following examples. However, it should be understood that the scope of the present invention is not limited by these examples.

### Examples

### Description of raw material and equipment

- Polyisocyanate composition:: Desmodur 1511L, a polydiphenylmethane diisocyanate (PMDI) having an isocyanate functionality of 2.7, an NCO group content of 30.5-32.5 wt%, and a viscosity of 160 - 240 mPa·s, available from Covestro Polymer (China) Co., Ltd. (NCO content refers to the content of NCO groups in the composition, measured according to GB/T 12009.4-2016)
- Glycerol:: average molecular weight: 92 g/mol, functionality: 3
- Diethylene glycol:: average molecular weight: 106 g/mol, functionality: 2
- Polyol 1:: glycerol-initiated polyether polyol, functionality:3, average molecular weight: 354 g/mol
- Polyol 2:: propylene glycol-initiated polyether polyol, functionality: 2, average molecular weight: 4000 g/mol
- Catalyst:: Fomrez UL-29, di-n-octyltin bis(isooctyl mercaptoacetate), available from Momentive Performance Materials Co. Ltd.
- Internal mold release:: Baydur 18BD230, fatty acid ester based mold release, available from Covestro Polymer (China) Co., Ltd.
- Fiber glass roving:: ECT-469P-4800TEX, available from Chongqing Polycomp International Corporation (China) Co. Ltd.
- Glass fiber knitted mat:: EMK-300, available from Chongqing Polycomp International Corporation (China) Co. Ltd.
- Pultrusion equipment: Composite crawler pultrusion machine, available from Nanjing Loyalty Composite Equipment Manufacture Company
- Dosing machine: Hydraulic Mini Link System, available from Magnum Venus Products

Preparation of polyurethane composite:
Taking the production of a 3mm^{∗} 100mm flat plate as an example

The process of producing a matted glass fiber reinforced polyurethane pultrusion composite is described in detail. Firstly, a glass fiber roving and a glass fiber mat were passed through a preform rack and sequentially into an injection box and a die. Raw materials for a polyurethane reaction system were supplied from a raw material tank with a metering and mixing tool and injected into the injection box. The polyurethane composition impregnated the glass fiber roving and the glass fiber mat in the inejction box. The fully impregnated glass fiber roving and glass fiber mat were sent into the die cavity for curing and shaping. The cured product was pulled out of the die with a pultrusion machine at a line speed of 1 m/min, and the properties of the pultrudate at the die outlet such as the processablity and the surface quality of the plate was observed and recorded. The cutting was performed according to the length requirement of the product to obtain the polyurethane composite.

According to the aforementioned method for preparing the polyurethane composite, Comparative Examples C1 - C3 and Example 1 were conducted with polyurethane reaction systems obtained according to the proportion of various components as shown in Table 1 and tested, and the results are shown in Table 1.

**Table 1**

| | C1 | C2 | C3 | 1 |
|---|---|---|---|---|
| Glycerol | 31 | 0 | 15.5 | 20 |
| Diethylene glycol | 0 | 31 | 15.5 | 11 |
| Polyol 1 | 60 | 60 | 60 | 60 |
| Polyol 2 | 9 | 9 | 9 | 9 |
| Catalyst | 0.4 | 0.4 | 0.4 | 0.4 |
| Internal mold release | 3 | 3 | 3 | 3 |
| Polyisocyanate composition to achieve index | 1.05 | 1.05 | 1.05 | 1.05 |
| Gel time at 25 °C [min] | 19 | 5 | 9 | 19 |
| Processability | Higher pull force | Resin get gel at injection box, die blocked | Resin get gel at injection box, die blocked | Compatible pull force |
| Surface quality | Resin peel off | - | - | Smooth surface, No resin peel off |

From the results according to Table 1, it becomes obvious that presence of both glycerol and diethylene glycol in a specific ratio according to the invention in an isocyanate reactive composition allows for a pultrusion process in which a fast line-speed is employed without adversely affecting mechanical properties of the resulting pultrudate.

## Claims

1. An isocyanate reactive composition for preparation of a polyurethane composite, comprising
a. a polyol blend comprising
a1. glycerol, and
a2. diethylene glycol
wherein a ratio of an amount of glycerin to an amount of diethylene glycol is > 1:1, preferably ≥ 1.5:1.

2. The isocyanate reactive composition according to claim 1, wherein a sum of the amounts of glycerol and diethylene glycol is 20 - 50 wt%, preferably 31 - 50 wt%, based on the total amount of the isocyanate reactive composition.

3. The isocyanate reactive composition according to any of claims 1 or 2, wherein the polyol blend further comprises
a3. a polyol, preferably a polyether polyol, having a functionality of 2 - 5, preferably 2 - 4, and a weight-average molecular weight of ≤1100 g/mol, preferably ≤800 g/mol, more preferably ≤750 g/mol,
a4. a polyol, preferably a polyether polyol, having a functionality of 2 - 3 and a weight-average molecular weight of ≥1200 g/mol, preferably ≥1500 g/mol, more preferably ≥2000 g/mol,
and wherein the isocyanate reactive composition further comprises
b. at least one metal catalyst, and
c. optionally an auxiliary agent and/or an additive, such as at least one of a filler, an internal release agent, a flame retardant, a smoke suppressant, a dye, a pigment, an antistatic agent, an antioxidant, a UV stabilizer, a diluent, an organic acid, an inorganic acid, a masking agent, an organic ligand, a defoamer, a coupling agent, a surface wetting agent, a leveling agent, a water-removing agent, a catalyst, a molecular sieve, a thixotropic agent, a plasticizer, a foaming agent, a foam stabilizing agent a free radical reaction suppressant or any combination of the foregoing.

4. The isocyanate reactive composition according to claim 3, wherein polyol a3. is present in an amount of 35 - 65 wt% and/or wherein polyol a4. is present in an amount of 5 - 15 wt%, each based on the total amount of the isocyanate reactive composition.

5. A polyurethane reaction system for preparation of a polyurethane composite comprising
i. the isocyanate reactive composition of any of claims 1 to 4, and
ii. an isocyanate composition comprising a polyisocyanate, preferably wherein the polyisocyanate is at least one of toluene diisocyanate, diphenylmethane diisocyanate, polyphenylmethane polyisocyanate, 1,5-naphthalene diisocyanate, hexamethylene diisocyanate, methylcyclohexyl diisocyanate, 4,4'-dicyclohexylmethane diisocyanate, isophorone diisocyanate, p-phenylene diisocyanate, p-xylylene diisocyanate, tetramethyldimethylene diisocyanate, a polymer of any of the foregoing, a prepolymer of any of the foregoing, or a combination of any of the foregoing.

6. The polyurethane reaction system according to claim 5 wherein an isocyanate index of the polyurethane reaction system is 0.9 - 1.4, preferably 0.95 - 1.3, more preferably 1.0 - 1.2.

7. The polyurethane reaction system according to any one of claims 5 or 6, wherein the polyurethane reaction system has a gel time at 25 °C of 10 - 50 minutes, preferably 12 - 40 minutes, more preferably 15 - 30 minutes.

8. A method for preparation of a polyurethane composite comprising the steps of
i. providing the polyurethane reaction system according to any one of claims 5 to 7 and a reinforcing fiber material
ii. impregnating the reinforcing fiber material with the polyurethane reaction system to obtain an impregnated reinforcing fiber material,
iii. curing the polyurethane reaction system of the impregnated reinforcing fiber material of step ii. to obtain the polyurethane composite.

9. The method according to claim 8, wherein the method is selected from a pultrusion process, a winding molding process, a hand lay-up molding process, a spray molding process, or a heating dual-track continuous molding process, preferably wherein the method is a pultrusion process.

10. The method according to any one of claims 8 or 9, wherein the polyurethane reaction system and the reinforcing fiber material are provided in amounts such that a content of the reinforcing fiber material 70 - 88 wt%, preferably 72 - 85 wt%, more preferably 75 - 82 wt%, based on the total weight of the polyurethane composite.

11. The method according to any one of claims 8 to 10, wherein the reinforcing fiber material is at least one of glass fibers, aramid fibers, carbon fibers, natural fibers, metal fibers or any combination of the foregoing.

12. A polyurethane composite obtained or obtainable by the method according to any one of claims 8 to 11.

13. A polyurethane product comprising the polyurethane composite according to claim 12, wherein the polyurethane product is selected from cable trays, frames of doors, windows or curtain walls, frames of ladders, solar frame, tent poles or pipes, anti-glare shields, floors, sucker rods, telegraph poles and cross arms, guardrails, gratings, architectural sectional materials, container sectional materials or plates, bike racks, fishing rods, cable cores, insulator core rods, antenna housings, single-layer or sandwiched continuous plates, sleepers, main spars or auxiliary spars of a turbine fan blade, preferably wherein the polyurethane product is selected from sleepers or sheets for producing main spars and/or auxiliary spars of a turbine fan blade.
